(19) Europäisches Patentamt / European Patent Office / Office européen des brevets

(11) **EP 3 401 837 B1**

(12) **FASCICULE DE BREVET EUROPEEN**

(45) Date de publication et mention de la délivrance du brevet:
**12.07.2023 Bulletin 2023/28**

(21) Numéro de dépôt: **18170809.0**

(22) Date de dépôt: **04.05.2018**

(51) Classification Internationale des Brevets (IPC):
**G06V 40/13** *(2022.01)*

(52) Classification Coopérative des Brevets (CPC):
**G06V 40/1312; G06V 10/145**

(54) **DISPOSITIF DE CAPTURE D'EMPREINTES**

VORRICHTUNG ZUM ABNEHMEN VON FINGERABDRÜCKEN

DEVICE FOR CAPTURING FINGERPRINTS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **10.05.2017 FR 1754070**

(43) Date de publication de la demande:
**14.11.2018 Bulletin 2018/46**

(73) Titulaire: **Idemia Identity & Security France 92400 Courbevoie (FR)**

(72) Inventeur: **TROUBOUL, Laurent 92130 ISSY LES MOULINEAUX (FR)**

(74) Mandataire: **Idemia 2, place Samuel de Champlain 92400 Courbevoie (FR)**

(56) Documents cités:
**DE-A1-102010 016 109     FR-B1- 2 927 713 US-B1- 8 224 064**

## Description

L'invention concerne un dispositif de capture d'une image d'une empreinte d'une partie corporelle à la volée et un procédé mis en oeuvre par le dispositif.

## Contexte de l'invention

L'utilisation d'empreintes digitales, par exemple du type empreinte d'un doigt, d'une pluralité de doigts, d'une paume de main, permet de sécuriser des accès à des bâtiments ou à des machines. La sécurité est ainsi renforcée dans la mesure où la probabilité que deux personnes aient deux empreintes digitales identiques est quasiment nulle.

Un dispositif de capture d'une empreinte digitale permet de capturer une image d'une empreinte digitale. Dans le cas d'une identification, cette empreinte est comparée avec un ensemble d'empreintes digitales de référence contenues dans une base de données. Dans le cas d'une authentification, cette empreinte est comparée à une seule empreinte digitale. La comparaison permet de déterminer si l'empreinte digitale capturée appartient ou non à une personne référencée dans la base de données ou si la personne est bien celle qu'elle prétend être.

La demande Française FR2927713 décrit un dispositif de capture d'empreintes à la volée. Ce dispositif permet d'obtenir une image d'une empreinte digitale d'une partie corporelle, telle qu'un doigt, plusieurs doigts ou une paume de main présentée dans le dispositif. Ce dispositif comprend :

- une source d'éclairage agissant comme un flash permettant d'éclairer la partie corporelle.
- un projecteur projetant une mire sous forme d'une série de barres lumineuses sur la partie corporelle. Les déformations de ladite mire lors de sa projection sur la partie corporelle permettent d'obtenir des informations à trois dimensions (3D) sur la partie corporelle. Ces informations 3D sont utilisées pour remettre à plat l'empreinte digitale et effectuer une remise à l'échelle de cette empreinte. Une fois remise à plat et à l'échelle, l'empreinte peut être comparée à une ou plusieurs empreintes de référence.
- une caméra haute vitesse comprenant un capteur d'images apte à capturer une image nette de la partie corporelle lors de son passage dans le dispositif.

Afin de distinguer la mire de l'empreinte dans l'image acquise par le dispositif de capture d'empreinte, la source d'éclairage et le projecteur de mire éclairent selon deux couleurs distinctes.

La plupart des capteurs d'images comprennent des photorécepteurs regroupés en groupes de quatre photorécepteurs comprenant un photorécepteur sensible au rouge, un photorécepteur sensible au bleu et deux photorécepteurs sensibles au vert. En allouant une couleur à la source d'éclairage et une autre à la mire, au maximum deux photorécepteurs sur quatre sont utilisés pour capturer une image d'empreinte. On ne bénéficie donc pas pleinement des capacités du capteur d'images puisque l'image d'empreinte obtenue possède une résolution au moins deux fois inférieure à une résolution d'image maximale dudit capteur d'images.

Il est souhaitable de pallier ces inconvénients de l'état de la technique. Il est notamment souhaitable de proposer un procédé et un dispositif dans lequel le capteur d'images est utilisé à pleine capacité afin qu'il fournisse une image d'empreinte ayant la résolution maximale autorisée par le capteur d'images.

## EXPOSE DE L'INVENTION

Selon un premier aspect de l'invention, l'invention concerne un dispositif de capture d'une image d'une empreinte d'une partie corporelle, comprenant un module d'acquisition d'images ayant un champ optique couvrant une zone d'acquisition dans laquelle peut évoluer la partie corporelle, une source lumineuse produisant un éclairage uniforme spatialement de la partie corporelle et un module de projection d'une mire projetant une mire lumineuse sur ladite partie corporelle perpendiculairement à une direction de mouvement du doigt. La mire lumineuse est un motif répétitif de plus faible intensité lumineuse que l'éclairage uniforme, le motif répétitif étant dans la même gamme de longueurs d'onde que la source lumineuse. Ledit dispositif est apte à activer simultanément la source lumineuse, le module de projection d'une mire et le module d'acquisition d'images pour permettre une acquisition d'une image de l'empreinte, dite image acquise ; à modéliser des variations d'intensité lumineuse de la projection de la mire sur la partie corporelle en déterminant des paramètres d'un modèle mathématique paramétrique prédéterminé 1D, le modèle paramétrique prédéterminé étant un modèle 1D défini par ligne de pixels et fonction d'un numéro de pixel dans ladite ligne ; à générer une image de la projection de la mire sur la partie corporelle, dite image synthétique, à partir dudit modèle en utilisant les paramètres précédemment déterminés et soustraire l'image synthétique à l'image acquise afin d'obtenir une image de la partie corporelle sans mire, ladite image de la partie corporelle sans mire pouvant être utilisée pour effectuer une identification ou une authentification.

Selon un mode de réalisation, lors de la modélisation, ledit dispositif est adapté pour parcourir l'image acquise ligne par ligne, et pour obtenir une courbe d'intensité lumineuse en fonction d'un numéro de pixel pour chaque ligne, chaque courbe comprenant une pluralité de créneaux, chaque créneau étant modélisé par une fonction dérivant d'une fonction logistique.

Selon un mode de réalisation, ledit dispositif est adapté pour détecter chaque créneau de chaque ligne, un créneau étant détecté dans une courbe d'intensité lumineuse lorsqu'une première variation d'intensité lumineuse entre un premier pixel et un pixel précédant ce premier pixel dans un sens de parcours de la ligne prédéterminé est positive et supérieure en valeur absolue à un premier seuil prédéterminé ; lorsque la première variation d'intensité lumineuse est suivie d'une seconde variation d'intensité lumineuse entre un second pixel et un pixel précédant ce second pixel dans le sens de parcours de la ligne prédéterminée, cette seconde variation étant négative et supérieure en valeur absolue au premier seuil prédéterminé et lorsque l'écart en nombre de pixels entre la première variation et la seconde variation est supérieur à un second seuil prédéterminé.

Selon un mode de réalisation, la fonction dérivant d'une fonction logistique est donnée par :

$$g(x) = \frac{K}{1 + a.e^{-r.(x+b-s)}} + \frac{K}{1 + a.e^{+r.(x-b-s)}} + d$$

ou par :

$$h(x) = \frac{K}{1 + a.e^{r.(x-b-s)}} - \frac{K}{1 + a.e^{r.(x+b-s)}} + d$$

où le paramètre $K$ fixe une amplitude maximum d'une variation, le paramètre $r$ fixe une pente de la variation, le paramètre $a$ fixe une forme de la variation, le paramètre $b$ représente une demi-largeur d'un créneau, le paramètre $d$ permet de fixer une valeur minimum d'intensité lumineuse, et le paramètre $s$ fixe une position du créneau sur un axe des pixels.

Selon un mode de réalisation, le paramètre $a$ et/ou le paramètre $r$ sont prédéterminés.

Selon un mode de réalisation, suite à la modélisation, ledit dispositif est apte à obtenir une liste de créneaux, chaque créneau de la liste étant représenté par les paramètres dudit modèle déterminé et par une position dudit créneau dans l'image acquise, et à générer l'image synthétique à partir de chaque créneau de ladite liste.

Selon un deuxième aspect de l'invention, l'invention concerne un procédé d'authentification ou d'identification comprenant :

obtenir une image, dite image acquise résultant d'une activation simultanée d'une source lumineuse, d'un module de projection d'une mire et d'un module d'acquisition d'images dans un dispositif de capture d'une image d'une empreinte d'une partie corporelle, ledit module d'acquisition d'images ayant un champ optique couvrant une zone d'acquisition dans laquelle peut évoluer la partie corporelle, la source lumineuse produisant un éclairage uniforme spatialement sur la partie corporelle et le module de projection d'une mire projetant une mire lumineuse sur ladite partie corporelle perpendiculairement à une direction de mouvement du doigt, la mire lumineuse étant un motif répétitif de plus faible intensité lumineuse que l'éclairage uniforme, le motif répétitif étant dans la même gamme de longueurs d'onde que ladite source lumineuse; modéliser des variations d'intensité lumineuse de la projection de la mire sur la partie corporelle en déterminant des paramètres d'un modèle mathématique paramétrique prédéterminé 1D, le modèle paramétrique prédéterminé étant un modèle 1D défini par ligne de pixels et fonction d'un numéro de pixel dans ladite ligne ; générer une image de la projection de la mire sur la partie corporelle, dite image synthétique, à partir dudit modèle en utilisant les paramètres précédemment déterminés et soustraire l'image synthétique à l'image acquise afin d'obtenir une image de la partie corporelle sans mire, ladite image de la partie corporelle sans mire pouvant être utilisée dans une identification ou une authentification.

Selon un mode de réalisation, le procédé comprend, obtenir des informations à trois dimensions sur la partie corporelle à partir d'informations de position de la mire dans l'image acquise et utiliser lesdites informations pour générer une image d'empreinte finale à partir de l'image de la partie corporelle sans mire dans laquelle l'empreinte est mise à plat et remise à une échelle correspondant à une échelle prédéterminée; et, comparer l'image d'empreinte finale à au moins une image d'empreinte de référence pour effectuer l'authentification ou l'identification.

Selon un troisième aspect de l'invention, l'invention concerne un programme d'ordinateur, comprenant des instructions pour mettre en oeuvre, par un dispositif, le procédé selon le deuxième aspect, lorsque ledit programme est exécuté par une unité de calcul dudit dispositif.

Selon un quatrième aspect de l'invention, l'invention concerne des moyens de stockage, stockant un programme d'ordinateur comprenant des instructions pour mettre en oeuvre, par un dispositif, le procédé selon le deuxième aspect, lorsque ledit programme est exécuté par une unité de calcul dudit dispositif.

## BREVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :

- la Fig. 1A illustre schématiquement une première vue d'un dispositif de capture d'une empreinte d'une partie corporelle selon l'invention ;
- la Fig. 1B illustre schématiquement une deuxième vue d'un dispositif de capture d'une empreinte d'une partie corporelle selon l'invention ;
- la Fig. 2A représente schématiquement une image acquise par une caméra du dispositif de capture d'une empreinte d'une partie corporelle selon l'invention lors d'une projection d'une mire sur une feuille de papier opaque disposée devant ladite caméra ;
- La Fig. 2B représente une courbe d'une intensité lumineuse en fonction d'un numéro de pixel représentative de l'intensité lumineuse des pixels d'une ligne horizontale de pixels de l'image de la projection de la mire sur une feuille de papier ;
- La Fig. 3A représente schématiquement une image acquise par la caméra du dispositif de capture d'une empreinte d'une partie corporelle selon l'invention d'une projection de la mire sur un doigt disposée devant ladite caméra ;
- La Fig. 3B représente une courbe d'une intensité lumineuse en fonction d'un numéro de pixel représentative de l'intensité lumineuse des pixels d'une ligne horizontale de pixels de l'image de la projection de la mire sur un doigt ;
- La Fig. 4 représente un procédé d'authentification ou d'identification mis en oeuvre par le dispositif de capture d'une empreinte d'une partie corporelle selon l'invention ;
- La Fig. 5 représente un exemple de procédé de modélisation des variations d'intensité lumineuse de la projection de la mire sur un doigt utilisant un modèle mathématique paramétrique ;
- La Fig. 6 représente un exemple de procédé de génération d'une image synthétique de l'invention ; et,
- La Fig. 7 illustre schématiquement un exemple d'architecture matérielle du module de traitement compris dans le dispositif de capture d'une empreinte d'une partie corporelle selon l'invention.

## DESCRIPTION DETAILLEE DE DIVERS MODES DE REALISATION

La description qui suit détaille plus particulièrement des modes de réalisation de la présente invention dans un contexte où la partie corporelle est un doigt. Elle s'applique toutefois à d'autres parties corporelles telles que plusieurs doigts, une paume de main, etc.

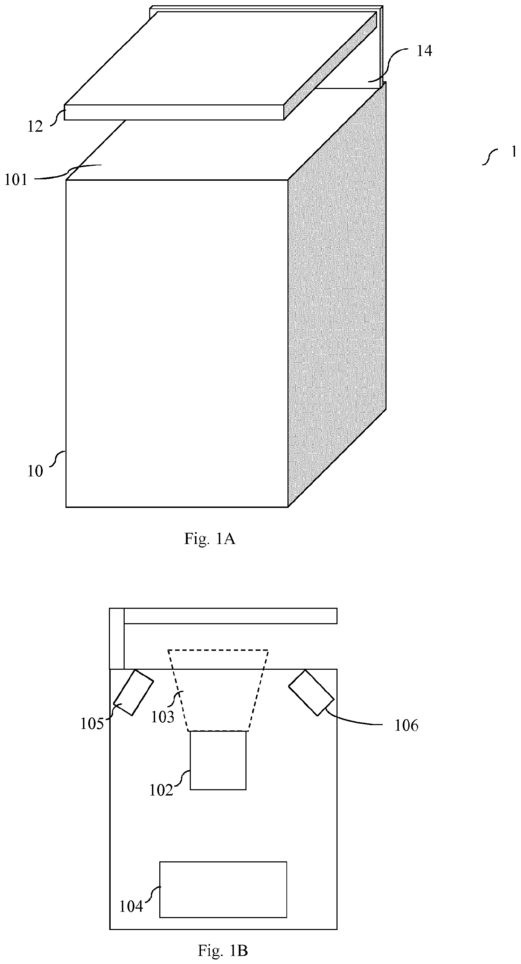

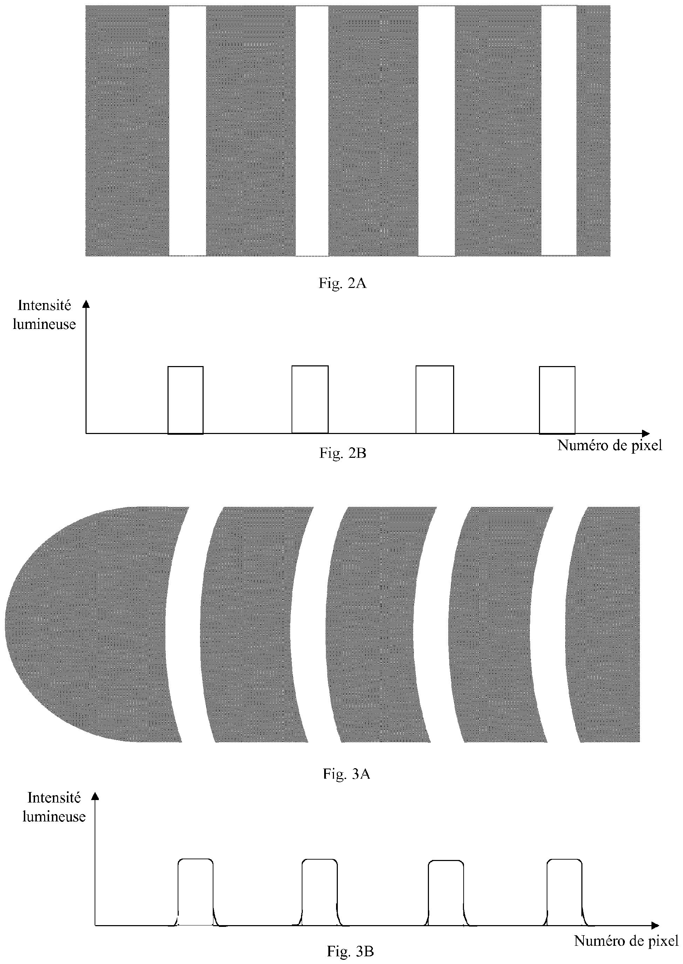

En référence aux **Figs. 1 et 2,** un dispositif de capture d'une image d'une empreinte d'une partie corporelle 1, appelé dispositif biométrique par la suite, conforme à l'invention, comprend un bâti comportant un pupitre 10 surmonté d'un écran 12 qui s'étend parallèlement à une face supérieure 101 transparente du pupitre 10. La face supérieure 101 et l'écran 12 sont écartés d'une distance de quelques centimètres (par exemple cinq centimètres pour l'acquisition des empreintes d'un doigt) pour définir entre eux une zone d'espace libre 14 ouverte, ici frontalement et latéralement sur ses deux côtés, pour former un passage pour un doigt de l'utilisateur. Le pupitre 10 renferme un module d'acquisition d'images tel qu'une caméra couleur 102 qui est montée dans le pupitre 10 pour avoir un champ optique couvrant une zone d'acquisition 103 qui est contenue en totalité dans la zone d'espace libre 14.

Dans un mode de réalisation, l'écran 12 comprend un traitement antireflet en face inférieure.

La zone d'acquisition 103 est ici plus précisément au centre de la zone d'espace libre 14 et a un plan parallèle à la face supérieure 101. Le champ optique de la caméra 102 a une largeur suffisante pour que la zone d'acquisition 103 couvre le doigt de l'utilisateur (par exemple un index, un majeur, un annulaire, un auriculaire, ou un pouce). La caméra 102 comprend un capteur, tel qu'un capteur CCD (« Charge Couple Device » en terminologie anglo-saxonne) ou CMOS (« Complementary Métal Oxide Semiconductor » en terminologie anglo-saxonne) ayant une vitesse d'acquisition suffisamment élevée pour prendre une image nette d'un doigt en mouvement dans la zone d'acquisition 103 avec une vitesse maximale de déplacement prédéterminée. Le capteur utilisé est par exemple un capteur de « 1,3 » millions de pixels avec une vitesse comprise entre « 60 » à « 100 » images par seconde.

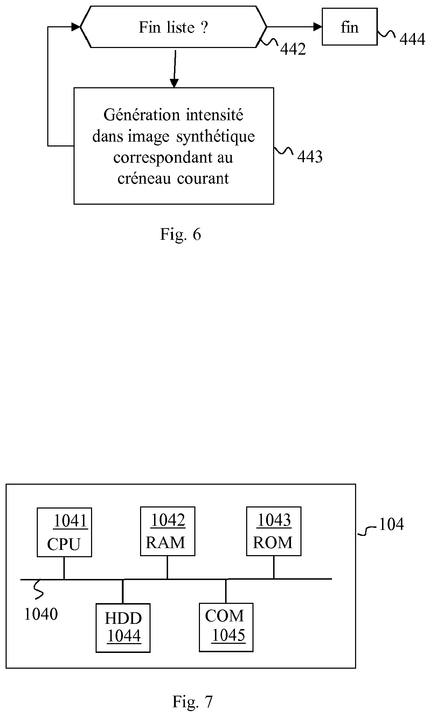

La caméra 102 est reliée à un module de traitement 104 auquel elle transmet des images couleurs. Le module de traitement 104 est décrit par la suite en relation avec la Fig. 7.

Le bâti comprend également un module de projection d'une mire lumineuse 105 et une source lumineuse 106. Le module de projection d'une mire 105 et la source lumineuse 106 sont fixés au bâti en dessous de la trajectoire de passage du doigt et sont dirigés vers la zone d'acquisition 103.

La source lumineuse 106 agit comme un flash et comprend par exemple au moins une DEL (Diode ElectroLuminescente : *« light-emitting diode »* en terminologie anglo-saxonne). La source lumineuse 106 produit un éclairage uniforme spatialement et de forte intensité dans une gamme de longueurs d'onde correspondant par exemple à une lumière verte. Dans un autre mode de réalisation, la source lumineuse 106 émet une lumière blanche.

Le module de projection d'une mire 105 projette une mire sur le doigt placé dans la zone d'espace libre 14 perpendiculairement à la direction de mouvement du doigt. La mire comprend un motif lumineux répétitif dans la même gamme de longueurs d'onde que la source lumineuse 106. Le motif lumineux répétitif comprend des barres lumineuses d'intensité lumineuse plus faible que l'intensité lumineuse générée par la source lumineuse 106 et espacées régulièrement. Les barres lumineuses sont définies ici pour avoir une période moyenne sur le doigt de « 70 » à « 80 » pixels à « 740 » dpi (points par pouce : « dots per inch » en terminologie anglo-saxonne).

Dans un mode de réalisation, la source lumineuse 106 et le module de projection d'une mire 105 utilisent des gammes de longueurs d'onde différentes.

La **Fig. 2A** représente schématiquement une image acquise par la caméra 102 d'une projection de la mire sur une feuille de papier opaque disposée dans la zone d'espace libre 14 parallèlement à la face supérieure 101.

Dans la Fig. 2A, la source lumineuse 106 est éteinte. La mire apparaît alors comme une alternance de zones lumineuses rectangulaires et de zones sombres.

La **Fig. 2B** représente une courbe d'une intensité lumineuse en fonction d'un numéro de pixel représentative de l'intensité lumineuse des pixels d'une ligne horizontale de pixels de l'image de la projection de la mire sur une feuille de papier représentée en Fig. 2A.

Cette courbe comprend une succession de créneaux rectangulaires espacés régulièrement. Chaque créneau rectangulaire peut être approximé par une fonction porte. La transition entre zones sombres et zones claires (et inversement) est ici abrupte.

La **Fig. 3A** représente schématiquement une image acquise par la caméra 102 d'une projection de la mire sur un doigt disposée dans la zone d'espace libre 14 parallèlement à la face supérieure 101.

Dans la Fig. 3A, la source lumineuse 106 est éteinte. Un doigt n'étant pas une surface plane, mais plutôt une forme grossièrement tubulaire, lors de la projection de la mire sur le doigt, les barres apparaissent courbes car elles épousent la forme du doigt.

La **Fig. 3B** représente une courbe d'une intensité lumineuse en fonction d'un numéro de pixel représentative de l'intensité lumineuse des pixels d'une ligne horizontale de pixels de l'image de la projection de la mire sur un doigt représentée en Fig. 3A.

Les créneaux représentés dans la Fig. 3B apparaissent émoussés en partie haute et évasés vers l'extérieur du créneau en partie basse. Contrairement à la feuille de papier qui n'est quasiment pas un milieu diffusant, le doigt est un milieu diffusant. La diffusion de la lumière dans le doigt atténue la transition entre une partie éclairée par la mire et une partie non éclairée par la mire. Les transitions entre les parties éclairées et les parties non éclairées dans la Fig. 3B sont plus douces que dans la Fig. 2B.

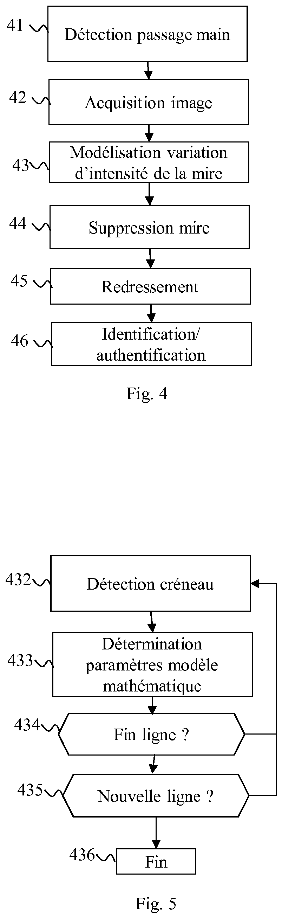

La **Fig. 4** représente un procédé d'authentification ou d'identification mis en oeuvre par le dispositif biométrique selon l'invention.

L'utilisateur souhaitant être identifié (ou authentifié) entre son doigt dans la zone d'espace libre 14 par un côté de celle-ci et déplace son doigt vers l'autre côté.

Dans une étape 41, un capteur du dispositif biométrique 1, ici une barrière infrarouge non représentée, détecte l'entrée du doigt dans la zone d'acquisition 103.

Dans une étape 42, le capteur commande une activation simultanée du module de projection d'une mire 105, de la source lumineuse 106 et une acquisition d'une image, dite image acquise, par la caméra 102. L'image acquise représente un doigt sur lequel apparaît une mire déformée. L'image acquise présente des variations d'intensité lumineuse. Des premières variations d'intensité lumineuse sont dues aux barres de la mire et ont une fréquence de variation moyenne. Des deuxièmes variations lumineuses sont dues à des défauts optiques ou à des défauts de la source lumineuse 106 qui n'éclaire pas le doigt de manière parfaitement uniforme. Ces deuxièmes variations d'intensité lumineuse ont une fréquence de variation faible par rapport à la fréquence de variation due aux barres de la mire. Des troisièmes variations lumineuses sont dues aux crêtes et aux vallées de l'empreinte digitale du doigt. Ces troisièmes variations d'intensité lumineuse ont une fréquence de variation élevée par rapport à la fréquence de variation due aux barres de la mire. Dans un mode de réalisation, le module de traitement 104 élimine lors de l'étape 42 les deuxièmes variations lumineuses afin que celles-ci ne perturbent pas les étapes suivantes du procédé. Pour ce faire, le module de traitement 104 équilibre les valeurs de pixels de l'image acquise. Par exemple, le module de traitement 104 applique une transformation dans le domaine fréquentiel à l'image acquise afin de faire passer cette image du domaine spatial au domaine fréquentiel. Dans le domaine fréquentiel, le module de traitement 104 élimine les fréquences spatiales faibles de l'image acquise transformée puis applique une transformation inverse à l'image acquise transformée ainsi modifiée.

On note que dans un mode de réalisation, le capteur du dispositif biométrique 1 aurait pu être remplacé par un bouton sur lequel l'utilisateur appuie pour activer simultanément le module de projection d'une mire 105, la source lumineuse 106 et la caméra 102 lorsque le doigt est dans la zone d'acquisition.

Dans une étape 43, le module de traitement 104 modélise les variations d'intensité lumineuse de la projection de la mire sur le doigt en utilisant un modèle mathématique paramétrique prédéterminé. Dans un mode de réalisation, le modèle mathématique prédéterminé est basé sur une fonction logistique. Une fonction logistique f(x) est définie de la manière suivante :

$$f(x) = K\frac{1}{1 + a.\,e^{-r.x}}$$

où la variable *x* est un numéro de pixel sur une ligne, les paramètres *K* et *a* sont des réels positifs et le paramètre *r* est un réel quelconque. La fonction logistique est particulièrement adaptée pour modéliser des variations abruptes (quasi-rectangulaires) d'un signal à une dimension telle que celle rencontrée dans une variation montante ou une variation descendante d'un créneau de la Fig. 3B. Le paramètre *K* fixe une amplitude maximum de la variation, le paramètre *r* fixe une pente de la variation et le paramètre *a* fixe une forme de la variation.

Une fonction g(x) apte à modéliser un créneau de la Fig. 3B (*i.e.* apte à modéliser une variation d'intensité lumineuse en fonction d'un numéro de pixel d'une ligne horizontale de l'image acquise) peut alors être obtenue en combinant deux fonctions logistiques de la manière suivante :

$$g(x) = \frac{K}{1 + a.\,e^{-r.(x+b-s)}} + \frac{K}{1 + a.\,e^{+r.(x-b-s)}} + d$$

où le paramètre *b* représente une demi-largeur d'un créneau, le paramètre *d* permet de fixer une valeur minimum d'intensité lumineuse, et le paramètre *s* fixe une position du créneau sur l'axe horizontal des pixels.

Dans un mode de réalisation, un créneau de la Fig. 3B peut être modélisé par une fonction h(x), elle aussi issue d'une combinaison de deux fonctions logistiques :

$$h(x) = \frac{K}{1 + a.\,e^{r.(x-b-s)}} - \frac{K}{1 + a.\,e^{r.(x+b-s)}} + d$$

La modélisation mise en oeuvre lors de l'étape 43 consiste alors à déterminer les paramètres du modèle mathématique paramétrique prédéterminé (*i.e.* par exemple les paramètres *a, K, r, b* et *s* de la fonction g(x) ou de la fonction h(x)) permettant de modéliser au mieux les variations d'intensité lumineuse dues à la mire dans l'image acquise.

D'autres fonctions aptes à modéliser un créneau de la Fig. 3B pourront être trouvées dans l'article Comparison of different analytical edge spread function models for MTF calculation using curve-fitting, T. Li, H. Feng, Proc. SPIE 7498, MIPPR 2009: Remote Sensing and GIS Data Processing and Other Applications, 74981H (30 October 2009).

L'étape 43 est détaillée par la suite en relation avec la Fig. 5.

Dans une étape 44, le module de traitement 104 génère une image de la projection de la mire sur le doigt, dite image synthétique, selon un procédé décrit en relation avec la Fig. 6 à partir du modèle mathématique paramétrique prédéterminé en utilisant les paramètres déterminés lors de l'étape 43 et soustrait l'image synthétique à l'image acquise afin d'obtenir une image du doigt sans mire. Il aurait été possible de rechercher la mire dans l'image acquise par exemple en utilisant une méthode de segmentation d'image. Toutefois, l'image de la mire obtenue aurait été bruitée et la soustraction de cette image bruitée à l'image acquise aurait amplifié un bruit déjà présent dans l'image acquise. Générer une image synthétique à partir du modèle mathématique paramétrique prédéterminé permet d'obtenir une image non (ou peu) bruitée. Ainsi, en soustrayant l'image synthétique à l'image acquise, on n'amplifie pas le bruit déjà présent dans l'image acquise. On augmente ainsi les performances du système biométrique 1 pour l'authentification et l'identification.

Dans une étape 45, le module de traitement 104 obtient des informations à trois dimensions (3D) sur la partie corporelle à partir d'informations de position de la mire dans l'image acquise. Les informations 3D sont utilisées pour générer une image d'empreinte finale à partir de l'image de doigt sans mire dans laquelle l'empreinte digitale est mise à plat et remise à une échelle prédéterminée correspondant à une échelle d'au moins une image d'empreinte de référence avec laquelle l'image d'empreinte finale devra être comparée. Le module de traitement 104 utilise pour cela des méthodes de remise à plat et de mise à l'échelle connues telle que la méthode décrite dans l'article « 3D Touchless fingerprints compatibility with legacy rolled images », Y. Chen et al., In Biométrie Consortium Conférence, Aug. 21 2006 Page(s): 1 - 6.

Lors d'une étape 46, l'image d'empreinte finale est comparée à une image d'empreinte de référence pour une authentification ou à une pluralité d'images d'empreinte de référence pour une identification.

La **Fig. 5** représente un exemple de procédé de modélisation des variations d'intensité lumineuse de la projection de la mire sur un doigt utilisant un modèle mathématique paramétrique prédéterminé.

Le procédé décrit en Fig. 5 détaille l'étape 43.

Lors de la mise en oeuvre du procédé décrit en Fig. 5, le module de traitement 104 parcourt l'image acquise ligne par ligne et de haut en bas. Le doigt est supposé apparaître horizontal dans l'image acquise tel que représenté schématiquement dans la Fig. 3A.

Dans une étape 432, le module de traitement 104 parcourt la première ligne de l'image acquise, par exemple de la gauche vers la droite, jusqu'à détecter un créneau. Un créneau est détecté sur une ligne de pixels en cours de parcours

- lorsqu'une première variation d'intensité lumineuse entre un premier pixel et un pixel précédant ce premier pixel dans le sens de parcours de la ligne est positive et supérieure en valeur absolue à un premier seuil prédéterminé ;
- lorsque la première variation d'intensité lumineuse est suivie d'une seconde variation d'intensité lumineuse entre un second pixel et un pixel précédant ce second pixel dans le sens de parcours de la ligne, cette seconde variation étant négative et supérieure en valeur absolue au premier seuil prédéterminé ;
- et que l'écart en nombre de pixels entre la première variation et la seconde variation est supérieur à un second seuil prédéterminé.

La distance entre le premier (respectivement le second) pixel et le pixel précédent est une distance prédéterminée (mesurée en pixels).

Les premier et second seuils et la distance prédéterminée sont déterminés à partir d'un vaste panel d'images acquises obtenues en utilisant le dispositif biométrique 1.

Lors de l'étape 432, des informations de localisation du créneau telles que la position du créneau courant dans la ligne (numéro de pixel du début du créneau, numéro de pixel de la fin du créneau) et le numéro de la ligne en cours de parcours sont sauvegardés en mémoire du module de traitement 104.

Dans une étape 433, le module de traitement 104 détermine des paramètres du modèle mathématique paramétrique prédéterminé adaptés au créneau détecté lors de l'étape 432. Lorsque le modèle mathématique paramétrique prédéterminé correspond à la fonction g(x) (respectivement h(x)), le module de traitement 104 recherche les paramètres $K, a, r, b$ et $s$ tels que la fonction g(x) (respectivement h(x)) épouse au mieux la forme du créneau trouvé lors de l'étape 432. Dans un mode de réalisation, le module de traitement 104 fait varier les paramètres $K, a, r, b$ et $s$, jusqu'à trouver un ensemble de paramètres minimisant une différence entre un créneau donné par la fonction g(x) (respectivement h(x)) et le créneau trouvé lors de l'étape 432. Lesdits paramètres peuvent par exemple être déterminés par une méthode de descente de gradients ou par une méthode de moindre carré.

Dans un mode de réalisation, le paramètre $a$ est fixé à l'unité ($a$=1).

Dans un mode de réalisation, le paramètre $r$ qui est relativement constant d'un doigt à l'autre est prédéterminé à l'aide d'un vaste panel d'images acquises obtenues en utilisant le dispositif biométrique 1. Le paramètre $r$ étant fortement influencé par les hautes fréquences spatiales (typiquement les fréquences spatiales dues aux crêtes et aux vallées), il est avantageux de fixer ce paramètre afin que la détermination des autres paramètres du modèle ne soit pas perturbée par lesdites hautes fréquences spatiales. Les paramètres $K, a, r, b$ et $s$ ainsi déterminés sont stockés en mémoire du module de traitement 104 avec les informations de localisation du créneau.

Une fois le traitement du créneau terminé, le module de traitement 104 détermine lors d'une étape 434 si toute la ligne a été parcourue et si ce n'est pas le cas, retourne à l'étape 432 pour rechercher un nouveau créneau ou finir le parcours de la ligne.

Si toute la ligne a été parcourue, le module de traitement 104 détermine lors d'une étape 435 si une autre ligne doit être examinée. Si c'est le cas, le module de traitement retourne à l'étape 432 et commence à rechercher un créneau dans une nouvelle ligne.

Sinon, le module de traitement 104 met fin au procédé de la Fig. 5 lors d'une étape 436. A la fin du procédé décrit en relation avec la Fig. 5, on obtient une liste de créneaux de l'image acquise chacun représenté par des paramètres $K, a, r, b$ et $s$ du modèle mathématique paramétrique prédéterminé et des informations de localisation.

La **Fig. 6** représente un exemple de procédé de génération d'une image synthétique de l'invention.

A partir de la liste de créneaux obtenue lors de l'étape de 43, le module de traitement 104 génère une image synthétique représentant la projection de la mire sur le doigt.

Dans une étape 442, le module de traitement détermine s'il a parcouru toute la liste de créneaux. Si toute la liste de créneaux a été parcourue, le procédé prend fin. L'image synthétique a alors été générée.

Sinon, lors d'une étape 443, le module de traitement 104 obtient la position d'un créneau courant dans l'image acquise et génère des intensités lumineuses à partir du modèle mathématique paramétrique à ladite position. Suite à l'étape 443, le module de traitement 104 retourne à l'étape 442, et si la liste de créneaux n'a pas été parcourue intégralement, retourne à l'étape 443 pour un nouveau créneau.

Dans un mode de réalisation, lorsque l'image acquise est une image multi-composantes ayant plusieurs composantes telles qu'une composante de luminance et deux composantes de chrominance, l'image synthétique est aussi une image multi-composantes. Dans ce cas, les procédés des Figs. 5 et 6 sont appliqués à chaque composante une à une. La soustraction de l'image synthétique à l'image acquise se fait dans chaque composante prise une à une.

La **Fig. 7** illustre schématiquement un exemple d'architecture matérielle du module de traitement 11.

Selon l'exemple d'architecture matérielle représenté à la Fig. 7, le module de traitement 104 comprend alors, reliés par un bus de communication 1040 : un processeur ou CPU (« Central Processing Unit » en anglais) 1041 ; une mémoire vive RAM (« Random Access Memory » en anglais) 1042 ; une mémoire morte ROM (« Read Only Memory » en anglais) 1043 ; une unité de stockage telle qu'un disque dur ou un lecteur de support de stockage, tel qu'un lecteur de cartes SD (« Secure Digital » en anglais) 1044 ; au moins une interface de communication 1045 permettant par exemple au module de traitement 104 de communiquer avec la caméra 102, la source lumineuse 106 et le module de projection d'une mire 105.

Le processeur 1041 est capable d'exécuter des instructions chargées dans la RAM 1042 à partir de la ROM 1043, d'une mémoire externe (non représentée), d'un support de stockage (tel qu'une carte SD), ou d'un réseau de communication. Lorsque le module de traitement 104 est mis sous tension, le processeur 1041 est capable de lire de la RAM 1042 des instructions et de les exécuter. Ces instructions forment un programme d'ordinateur causant la mise en oeuvre, par le processeur 1041, du procédé décrit en relation avec la Fig. 4.

Le procédé décrit en relation avec la Fig. 4 peut être implémenté sous forme logicielle par exécution d'un ensemble d'instructions par une machine programmable, par exemple un DSP (« Digital Signal Processor » en anglais),un microcontrôleur ou un GPU (processeur graphique, « Graphics Processing Unit » en terminologie anglo-saxonne), ou être implémenté sous forme matérielle par une machine ou un composant dédié, par exemple un FPGA (« Field-Programmable Gate Array » en anglais) ou un ASIC (« Application-Specific Integrated Circuit » en anglais).

## Revendications

1. Dispositif de capture d'une image d'une empreinte d'une partie corporelle, comprenant un module d'acquisition d'images (102) ayant un champ optique couvrant une zone d'acquisition (103) dans laquelle peut évoluer la partie corporelle, une source lumineuse (106) produisant un éclairage uniforme spatialement de la partie corporelle et un module de projection d'une mire (105) projetant une mire lumineuse sur ladite partie corporelle perpendiculairement à une direction de mouvement du doigt, **caractérisé en ce que** :

   la mire lumineuse est un motif répétitif de plus faible intensité lumineuse que l'éclairage uniforme, ledit motif répétitif étant dans la même gamme de longueurs d'onde que ladite source lumineuse;
   ledit dispositif est apte à :

      activer (42) simultanément la source lumineuse, le module de projection d'une mire et le module d'acquisition d'images pour permettre une acquisition d'une image de l'empreinte, dite image acquise ;
      modéliser (43) des variations d'intensité lumineuse de la projection de la mire sur la partie corporelle en déterminant des paramètres d'un modèle mathématique paramétrique prédéterminé 1D, ledit modèle paramétrique prédéterminé étant un modèle 1D défini par ligne de pixels et fonction d'un numéro de pixel dans ladite ligne ;
      générer (44) une image de la projection de la mire sur la partie corporelle, dite image synthétique, à partir dudit modèle en utilisant les paramètres précédemment déterminés et soustraire l'image synthétique à l'image acquise afin d'obtenir une image de la partie corporelle sans mire, ladite image de la partie corporelle sans mire pouvant être utilisée (45, 46) pour effectuer une identification ou une authentification.

2. Dispositif selon la revendication 1 **caractérisé en ce que**, lors de la modélisation, ledit dispositif est adapté pour parcourir l'image acquise ligne par ligne, et pour obtenir une courbe d'intensité lumineuse en fonction d'un numéro de pixel pour chaque ligne, chaque courbe comprenant une pluralité de créneaux, chaque créneau étant modélisé par une fonction dérivant d'une fonction logistique.

3. Dispositif selon la revendication 2, **caractérisé en ce que** ledit dispositif est adapté pour détecter chaque créneau de chaque ligne, un créneau étant détecté dans une courbe d'intensité lumineuse lorsqu'une première variation d'intensité lumineuse entre un premier pixel et un pixel précédant ce premier pixel dans un sens de parcours de la ligne prédéterminée est positive et supérieure en valeur absolue à un premier seuil prédéterminé; lorsque la première variation d'intensité lumineuse est suivie d'une seconde variation d'intensité lumineuse entre un second pixel et un pixel précédant ce second pixel dans le sens de parcours de la ligne prédéterminée, cette seconde variation étant négative et supérieure en valeur absolue au premier seuil prédéterminé et lorsque l'écart en nombre de pixels entre la première variation et la seconde variation est supérieur à un second seuil prédéterminé.

**4.** Dispositif selon la revendication 2 ou 3, **caractérisé en ce que** la fonction dérivant d'une fonction logistique est donnée par :

$$g(x) = \frac{K}{1 + a.\, e^{-r.(x+b-s)}} + \frac{K}{1 + a.\, e^{+r.(x-b-s)}} + d$$

Ou par :

$$h(x) = \frac{K}{1 + a.\, e^{r.(x-b-s)}} - \frac{K}{1 + a.\, e^{r.(x+b-s)}} + d$$

où le paramètre $K$ fixe une amplitude maximum d'une variation, le paramètre $r$ fixe une pente de la variation, le paramètre $a$ fixe une forme de la variation, le paramètre $b$ représente une demi-largeur d'un créneau, le paramètre $d$ permet de fixer une valeur minimum d'intensité lumineuse, et le paramètre $s$ fixe une position du créneau sur un axe des pixels.

**5.** Dispositif selon la revendication 4, **caractérisé en ce que** le paramètre $a$ et/ou le paramètre $r$ sont prédéterminés.

**6.** Dispositif selon l'une quelconque des revendications 2 à 5, **caractérisé en ce que**, suite à la modélisation, ledit dispositif est apte à obtenir une liste de créneaux, chaque créneau de la liste étant représenté par les paramètres dudit modèle déterminés et par une position dudit créneau dans l'image acquise, et à générer l'image synthétique à partir de chaque créneau de ladite liste.

**7.** Procédé d'authentification ou d'identification, **caractérisé en ce qu'**il comprend :

obtenir une image, dite image acquise résultant d'une activation (42) simultanée d'une source lumineuse, d'un module de projection d'une mire et d'un module d'acquisition d'images dans un dispositif de capture d'une image d'une empreinte d'une partie corporelle, ledit module d'acquisition d'images (102) ayant un champ optique couvrant une zone d'acquisition (103) dans laquelle peut évoluer la partie corporelle, la source lumineuse (106) produisant un éclairage uniforme spatialement sur la partie corporelle et le module de projection d'une mire (105) projetant une mire lumineuse sur ladite partie corporelle perpendiculairement à une direction de mouvement du doigt, la mire lumineuse est un motif répétitif de plus faible intensité lumineuse que l'éclairage uniforme, ledit motif répétitif étant dans la même gamme de longueurs d'onde que ladite source lumineuse ;
modéliser (43) des variations d'intensité lumineuse de la projection de la mire sur la partie corporelle en déterminant des paramètres d'un modèle mathématique paramétrique prédéterminé 1D, ledit modèle paramétrique prédéterminé étant un modèle 1D défini par ligne de pixels et fonction d'un numéro de pixel dans ladite ligne;
générer (44) une image de la projection de la mire sur la partie corporelle, dite image synthétique, à partir dudit modèle en utilisant les paramètres précédemment déterminés et soustraire l'image synthétique à l'image acquise afin d'obtenir une image de la partie corporelle sans mire, ladite image de la partie corporelle sans mire pouvant être utilisée dans une identification ou une authentification.

**8.** Procédé selon la revendication 7, **caractérisé en ce que** modéliser comprend parcourir l'image acquise ligne par ligne, et obtenir une courbe d'intensité lumineuse en fonction d'un numéro de pixel pour chaque ligne, chaque courbe comprenant une pluralité de créneaux, chaque créneau étant modélisé par une fonction dérivant d'une fonction logistique.

**9.** Procédé selon la revendication 7 ou 8, **caractérisé en ce qu'**il comprend :

obtenir (45) des informations à trois dimensions sur la partie corporelle à partir d'informations de position de la mire dans l'image acquise et utiliser lesdites informations pour générer une image d'empreinte finale à partir de l'image de la partie corporelle sans mire dans laquelle l'empreinte est mise à plat et remise à une échelle correspondant à une échelle prédéterminée; et,
comparer (46) l'image d'empreinte finale à au moins une image d'empreinte de référence pour effectuer l'authentification ou l'identification.

**10.** Programme d'ordinateur, **caractérisé en ce qu'**il comprend des instructions pour mettre en oeuvre, par un dispositif selon la revendication 1, le procédé selon la revendication 7 à 9, lorsque ledit programme est exécuté par une unité de calcul dudit dispositif.

11. Moyens de stockage, **caractérisés en ce qu'**ils stockent un programme d'ordinateur comprenant des instructions pour mettre en oeuvre, par un dispositif selon la revendication 1, le procédé selon la revendication 7 à 9, lorsque ledit programme est exécuté par une unité de calcul dudit dispositif.

**Patentansprüche**

1. Vorrichtung zum Erfassen eines Bildes von einem Abdruck eines Körperteils, die ein Bilderfassungsmodul (102) mit einem Sichtfeld, das einen Erfassungsbereich (103) abdeckt, in dem sich der Körperteil hin und her bewegen kann, eine Lichtquelle (106), die eine räumlich gleichmäßige Beleuchtung des Körperteils erzeugt, und ein Musterprojektionsmodul (105) umfasst, das ein Lichtmuster auf den Körperteil senkrecht zu einer Bewegungsrichtung des Fingers projiziert, **dadurch gekennzeichnet, dass**:

   das Lichtmuster ein sich wiederholendes Motiv mit geringerer Lichtintensität als die gleichmäßige Beleuchtung ist, wobei das sich wiederholende Motiv im selben Wellenlängenbereich wie die Lichtquelle liegt;
   wobei die Vorrichtung geeignet ist zum:

   gleichzeitigen Aktivieren (42) der Lichtquelle, des Musterprojektionsmoduls und des Bilderfassungsmoduls, um eine Erfassung eines Bildes des Abdrucks, erfasstes Bild genannt, zu ermöglichen;
   Modellieren (43) von Variationen der Lichtintensität der Musterprojektion auf den Körperteil durch Bestimmen von Parametern eines vorgegebenen parametrischen mathematischen 1D-Modells, wobei das vorgegebene parametrische Modell ein 1D-Modell ist, das durch Pixelzeilen und die Funktion einer Pixelnummer in der Zeile definiert ist;
   Erzeugen (44) eines Bildes der Musterprojektion auf den Körperteil, synthetisches Bild genannt, auf Grundlage des Modells unter Verwendung der zuvor bestimmten Parameter und Subtrahieren des synthetischen Bildes vom erfassten Bild, um ein Bild des Körperteils ohne Muster zu erhalten, wobei das Bild des Körperteils ohne Muster zur Identifizierung oder Authentifizierung verwendet werden kann (45, 46).

2. Vorrichtung nach Anspruch 1, **dadurch gekennzeichnet, dass** die Vorrichtung bei der Modellierung dazu eingerichtet ist, das erfasste Bild zeilenweise zu durchlaufen und eine Kurve der Lichtintensität in Abhängigkeit von einer Pixelnummer für jede Zeile zu erhalten, wobei jede Kurve eine Vielzahl von Lücken umfasst, wobei jede Lücke durch eine Funktion modelliert wird, die von einer logistischen Funktion abgeleitet ist.

3. Vorrichtung nach Anspruch 2, **dadurch gekennzeichnet, dass** die Vorrichtung dazu eingerichtet ist, jede Lücke jeder Linie zu erkennen, wobei eine Lücke in einer Lichtintensitätskurve erkannt wird, wenn eine erste Änderung der Lichtintensität zwischen einem ersten Pixel und einem Pixel, das diesem ersten Pixel in einer Laufrichtung der vorbestimmten Linie vorausgeht, positiv ist und im absoluten Wert größer als ein erster vorbestimmter Schwellenwert ist; wenn auf die erste Änderung der Lichtintensität eine zweite Änderung der Lichtintensität zwischen einem zweiten Pixel und einem Pixel folgt, das diesem zweiten Pixel in der Laufrichtung der vorbestimmten Linie vorausgeht, wobei diese zweite Änderung negativ ist und im absoluten Wert größer als der erste vorbestimmte Schwellenwert ist, und wenn der Abstand in der Anzahl der Pixel zwischen der ersten Änderung und der zweiten Änderung größer als ein zweiter vorbestimmter Schwellenwert ist.

4. Vorrichtung nach Anspruch 2 oder 3 **dadurch gekennzeichnet, dass** die von einer logistischen Funktion abgeleitete Funktion gegeben ist durch:

$$g(x) = \frac{K}{1+a.e^{-r.(x+b-s)}} + \frac{K}{1+a.e^{+r.(x-b-s)}} + d$$

oder durch:

$$h(x) = \frac{K}{1+a.e^{r.(x-b-s)}} - \frac{K}{1+a.e^{r.(x+b-s)}} + d$$

wobei der Parameter *K* eine maximale Amplitude einer Änderung festlegt, der Parameter *r* eine Steigung der Änderung festlegt, der Parameter *a* eine Form der Änderung festlegt, der Parameter *b* eine halbe Breite einer Lücke darstellt, der Parameter *d* es ermöglicht, einen Mindestwert für die Lichtintensität festzulegen und der Parameter *s* eine Position der Lücke auf einer Pixelachse festlegt.

5. Vorrichtung nach Anspruch 4, **dadurch gekennzeichnet, dass** der Parameter *a* und/oder der Parameter *r* vorbestimmt sind.

6. Vorrichtung nach einem der Ansprüche 2 bis 5, **dadurch gekennzeichnet, dass** die Vorrichtung infolge der Modellierung dazu geeignet ist, eine Liste von Lücken zu erhalten, wobei jede Lücke der Liste durch die bestimmten Parameter des Modells und durch eine Position der Lücke im erfassten Bild dargestellt ist, und das synthetische Bild auf Grundlage jeder Lücke der Liste zu erzeugen.

7. Verfahren zur Authentifizierung oder Identifizierung, **dadurch gekennzeichnet, dass** es umfasst:

Erhalten eines Bildes, erfasstes Bild genannt, als Ergebnis einer gleichzeitigen Aktivierung (42) einer Lichtquelle, eines Musterprojektionsmoduls und eines Bilderfassungsmoduls in einer Vorrichtung zur Erfassung eines Bildes von einem Abdruck eines Körperteils, wobei das Bilderfassungsmodul (102) ein Sichtfeld hat, das einen Erfassungsbereich (103) abdeckt, in dem sich der Körperteil hin und her bewegen kann, wobei die Lichtquelle (106) eine räumlich gleichmäßige Beleuchtung über dem Körperteil erzeugt und das Musterprojektionsmodul (105) ein Lichtmuster auf den Körperteil senkrecht zu einer Bewegungsrichtung des Fingers projiziert, das Lichtmuster ein sich wiederholendes Muster mit geringerer Lichtintensität als die gleichmäßige Beleuchtung ist, wobei das sich wiederholende Muster im selben Wellenlängenbereich wie die Lichtquelle liegt;
Modellieren (43) der Lichtintensitätsänderungen der Musterprojektion auf den Körperteil durch Bestimmen der Parameter eines vorbestimmten parametrischen mathematischen 1D-Modells, wobei das vorbestimmte parametrische Modell ein 1D-Modell ist, das durch Pixelzeilen und die Funktion einer Pixelnummer in der Zeile definiert ist;
Erzeugen (44) eines Bildes der Musterprojektion auf den Körperteil, synthetisches Bild genannt, auf Grundlage des Modells unter Verwendung der zuvor bestimmten Parameter und Subtrahieren des synthetischen Bildes vom erfassten Bild, um ein Bild des Körperteils ohne Muster zu erhalten, wobei das Bild des Körperteils ohne Muster bei einer Identifizierung oder Authentifizierung verwendet werden kann.

8. Verfahren nach Anspruch 7, **dadurch gekennzeichnet, dass** Modellieren ein zeilenweises Durchlaufen des erfassten Bildes und Erhalten einer Lichtintensitätskurve in Abhängigkeit von der Pixelnummer für jede Zeile umfasst, wobei jede Kurve eine Vielzahl von Lücken umfasst, wobei jede Lücke durch eine Funktion modelliert wird, die von einer logistischen Funktion abgeleitet ist.

9. Verfahren nach Anspruch 7 oder 8, **dadurch gekennzeichnet, dass** es umfasst:

Erhalten (45) der dreidimensionalen Informationen über den Körperteil auf Grundlage von Informationen über die Position des Musters im erfassten Bild und Verwenden der Informationen, um ein endgültiges Abdruckbild auf Grundlage des Bildes des Körperteils ohne Muster zu erzeugen, in dem der Abdruck flach angeordnet und auf einen Maßstab gebracht wird, der einem vorbestimmten Maßstab entspricht; und
Vergleichen (46) des endgültigen Abdruckbildes mit mindestens einem Referenzabdruckbild, um die Authentifizierung oder Identifizierung durchzuführen.

10. Computerprogramm, **dadurch gekennzeichnet, dass** es Anweisungen zum Ausführen des Verfahrens nach den Ansprüchen 7 bis 9 durch eine Vorrichtung nach Anspruch 1 umfasst, wenn das Programm von einer Recheneinheit der Vorrichtung ausgeführt wird.

11. Speichermedien, **dadurch gekennzeichnet, dass** sie ein Computerprogramm speichern, das Anweisungen zum Ausführen des Verfahrens nach Anspruch 7 bis 9 durch eine Vorrichtung nach Anspruch 1 umfasst, wenn das Programm von einer Recheneinheit der Vorrichtung ausgeführt wird.

**Claims**

1. Device for capturing an image of a print of a body part, comprising an image-acquiring module (102) having an optical field covering an acquisition zone (103) through which the body part may move, a light source (106) that produces a spatially uniform illumination of the body part and a graticule-projecting module (105) that projects a luminous graticule onto said body part perpendicularly to a direction of movement of the finger, **characterized in that**:

the luminous graticule is a repetitive pattern of lower light intensity than the uniform illumination, said repetitive pattern being in the same wavelength range as said light source; and
said device is able:

to simultaneously activate (42) the light source, the graticule-projecting module and the image-acquiring module in order to allow an image of the print, called the acquired image, to be acquired;
to model (43) the variations in light intensity of the projection of the graticule on the body part by determining parameters of a preset 1D parametric mathematical model, said preset parametric model being a 1D model defined per row of pixels and depending on a pixel number in said row;
to generate (44) an image of the projection of the graticule on the body part, called the synthetic image, on the basis of said model and using the parameters determined beforehand, and to subtract the synthetic image from the acquired image in order to obtain a graticule-free image of the body part, said graticule-free image of the body part being able to be used (45, 46) to carry out an identification or an authentication.

2. Device according to Claim 1, **characterized in that**, during the modelling, said device is able to scan the acquired image row by row, and to obtain a curve of light intensity as a function of pixel number for each row, each curve comprising a plurality of crenels, each crenel being modelled by a function deriving from a logistic function.

3. Device according to Claim 2, **characterized in that** said device is able to detect each crenel of each row, a crenel being detected in a curve of light intensity when: a first variation in light intensity between a first pixel and a pixel preceding this first pixel in a preset direction in which the row is scanned is positive and higher in absolute value than a first preset threshold; when the first variation in light intensity is followed by a second variation in light intensity between a second pixel and a pixel preceding this second pixel in the preset direction in which the row is scanned, this second variation being negative and higher in absolute value than the first preset threshold and when the separation in number of pixels between the first variation and the second variation is larger than a second preset threshold.

4. Device according to Claim 2 or 3, **characterized in that** the function deriving from a logistic function is given by:

$$g(x) = \frac{K}{1 + a.\,e^{-r.(x+b-s)}} + \frac{K}{1 + a.\,e^{+r.(x-b-s)}} + d$$

or by:

$$h(x) = \frac{K}{1 + a.\,e^{r.(x-b-s)}} - \frac{K}{1 + a.\,e^{+r.(x+b-s)}} + d$$

where the parameter $K$ sets a maximum amplitude of a variation, the parameter $r$ sets a slope of the variation, the parameter $a$ sets a form of the variation, the parameter $b$ represents a half-width of a crenel, the parameter $d$ allows a minimum value to be set for the light intensity, and the parameter $s$ sets a position of the crenel on an axis of the pixels.

5. Device according to Claim 4, **characterized in that** the parameter $a$ and/or the parameter r are preset.

6. Device according to any one of Claims 2 to 5, **characterized in that**, following the modelling, said device is able to obtain a list of crenels, each crenel of the list being represented by the determined parameters of said model and by a position of said crenel in the acquired image, and to generate the synthetic image on the basis of each crenel of said list.

7. Authenticating or identifying method, **characterized in that** it comprises:

obtaining an image, called the acquired image, resulting from simultaneous activation (42) of a light source, of a graticule-projecting module and of an image-acquiring module in a device for capturing an image of a print of a body part, said image-acquiring module (102) having an optical field covering an acquisition zone (103) through which the body part may move, the light source (106) producing a spatially uniform illumination on the body part and the graticule-projecting module (105) projecting a luminous graticule onto said body part perpendicularly to a direction of movement of the finger, the luminous graticule being a repetitive pattern of lower light intensity than the uniform illumination, said repetitive pattern being in the same wavelength range as said light source; modelling (43) the variations in light intensity of the projection of the graticule on the body part by determining parameters of a preset 1D parametric mathematical model, said preset parametric model being a 1D model defined per row of pixels and depending on a pixel number in said row;

generating (44) an image of the projection of the graticule on the body part, called the synthetic image, on the basis of said model and using the parameters determined beforehand, and subtracting the synthetic image from the acquired image in order to obtain a graticule-free image of the body part, said graticule-free image of the body part being able to be used to carry out an identification or an authentication.

8. Method according to Claim 7, **characterized in that** the modelling comprises scanning the acquired image row by row, and obtaining a curve of light intensity as a function of pixel number for each row, each curve comprising a plurality of crenels, each crenel being modelled by a function deriving from a logistic function.

9. Method according to Claim 7 or 8, **characterized in that** it comprises:

obtaining (45) three-dimensional information on the body part from information on the position of the graticule in the acquired image and using said information to generate a final print image from the graticule-free image of the body part, in which image the print is flattened and rescaled to a scale corresponding to a preset scale; and, comparing (46) the final print image to at least one reference print image in order to carry out the authentication or identification.

10. Computer program, **characterized in that** it comprises instructions for implementing, with a device according to Claim 1, the method according to Claims 7 to 9, when said program is executed by a computational unit of said device.

11. Storage means, **characterized in that** they store a computer program comprising instructions for implementing, with a device according to Claim 1, the method according to Claims 7 to 9, when said program is executed by a computational unit of said device.

Fig. 1A

Fig. 1B

Fig. 2A

Fig. 2B

Intensité lumineuse

Numéro de pixel

Fig. 3A

Fig. 3B

Intensité lumineuse

Numéro de pixel

41 — Détection passage main

42 — Acquisition image

43 — Modélisation variation d'intensité de la mire

44 — Suppression mire

45 — Redressement

46 — Identification/ authentification

Fig. 4

432 — Détection créneau

433 — Détermination paramètres modèle mathématique

434 — Fin ligne ?

435 — Nouvelle ligne ?

436 — Fin

Fig. 5

Fin liste ? 442

fin 444

Génération intensité dans image synthétique correspondant au créneau courant 443

Fig. 6

1041 CPU 1042 RAM 1043 ROM 104

1040 HDD 1044 COM 1045

Fig. 7

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2927713

**Littérature non-brevet citée dans la description**

- **T. LI, H. FENG.** Comparison of different analytical edge spread function models for MTF calculation using curve-fitting. *Proc. SPIE 7498, MIPPR 2009: Remote Sensing and GIS Data Processing and Other Applications,* 30 Octobre 2009, 74981H

- **Y. CHEN et al.** 3D Touchless fingerprints compatibility with legacy rolled images. *In Biométrie Consortium Conférence,* 21 Août 2006, 1-6